# EUROPEAN PATENT APPLICATION

(11) **EP 4 001 968 A1**
(43) Date of publication of application: **25.05.2022**
(21) Application number: 20209023.9
(22) Date of filing: 20.11.2020
(51) Int. Cl.: G01S 19/21

(54) **METHOD FOR GENERATING A VERIFIABLE DATA SIGNAL COMPRISING A TIMESTAMP**

(71) Applicant: Fraunhofer-Gesellschaft zur Förderung der angewandten Forschung e.V., 80686 München (DE)
(72) Inventor: De Urquijo, Santiago, 91058 Erlangen (DE); Rubino, Daniel, 91058 Erlangen (DE); Rügamer, Alexander, 91058 Erlangen (DE)
(74) Representative: Pfitzner, Hannes

(57) **Abstract**

Method (100) for generating a data signal comprising a timestamp (DSTS), the method comprising the following steps: providing (110) a digital representation of a radio frequency data signal (DS); providing (120) one or more internal time information (IT) by use of one or more internal time sources (12); combining (130) the digital representation of the RF data signal and at least one internal time information of the one or more time sources to obtain the data signal comprising the timestamp comprising the internal time information; and verifying (140) the data signal based on the internal time information.

## Description

Embodiments of the present invention refer to a method for generating a data signal comprising a timestamp and to a corresponding electronic circuitry. Preferred embodiments refer to an infrastructure device comprising the electronic circuitry. Further embodiments refer to a system comprising the circuitry and an authentication server. Preferred embodiments refer to a method and a system for reliable time verification monitoring.

Coordinated Universal Time (UTC) is globally used as the standard measure of consistent time. Timing & Synchronisation (T&S) based on reliable correct clock data and precise timing sources are essential for many application fields in critical infrastructure like telecommunication networks, energy networks, and financial transactions. New infrastructure is currently evolving in the area of automated and connected driving and other industrial and scientific applications.

The global navigation satellite system (GNSS) network allows worldwide a synchronization in the area of a few nano-seconds, without dependencies to external infrastructure. In many applications the accurate timing GNSS receivers rely on the unprotected signals provided by GPS, GLONASS, BeiDou, Galileo, etc. These signals, however, were not designed for critical and secure applications and thus are insufficiently or not at all protected against tampering.

A secure timing receiver could also exploit encrypted - and therefore protected - GNSS signals directly with embedded security module. This protected asset requires keying procedures, protection mechanism and several regulatory in order to be operated at a facility that requires trustable positing and time information, e.g. used for synchronization purposes. The protection should be provided against "spoofing" and/or "meaconing". A spoofing attack is a situation in which a system identifies as another by falsifying data, to gain an illegitimate advantage; thus, spoofing means that a spurious signal is generated. A meaconing attack is the interception and rebroadcast of signals, like navigation signals. These signals are rebroadcast on the received frequency, typically, with power higher than the original signal, to confuse enemy navigation. There are also investigations ongoing related server-based concepts exploiting encrypted signals, but potential threat of meaconing open-sky GNSS signals with a minimum latency remains.

Stable and accurate time keeping references like atomic clocks are expensive and most of the infrastructures uses low cost single band or dual band GNSS based timing receivers using the unprotected GNSS signals.

Furthermore, there is the Network Time Protocol (NTP), a method for receiving clock time synchronization with the constrains of regular connection with an external server. The time accuracy of NTP over the internet (to within tens of milliseconds) is much lower compared to GNSS (up to nanoseconds) and not sufficient for a variety of time critical applications.

It is an objective of the present invention to provide a concept enabling a reliable (i.e. trustable) time verification and monitoring, especially robust against the threat of meaconing.

The objective is solved by the subject matter of the independent claims.

Embodiments of the present invention provide a method for generating a data signal comprising a timestamp. The timestamp comprises the internal time information. The method comprises the initial step of providing a digital representation of an radio frequency (DS) data signal and providing one or more internal time information by use of one or more internal time sources. After that the digital representation of an RF data signal and at least one internal time information of the one or more time sources is combined to obtain the data signal comprising the timestamp comprising the internal time information. The method further comprises the step of verifying the data signal or the authenticity of the data signal based on the internal time information which can be extracted out of the timestamp. In context of the authenticity it should be mentioned that a distinction can be made between an authentic signal (i.e. encryption for protection against spoofing) and internal time (for protection against meaconing).

Regarding the digital representation of an RF data signal it should be mentioned that, according to embodiments, this digital representation of an RF data signal comprises an external time information. According to embodiments, the digital representation of an RF data signal may be a GNSS signal, i.e. a signal on which a position and external time determination can be performed.

According to embodiments, the method comprises the step of extracting the external time information out of the digital representation of an RF data signal, such that the external time information and the internal time information can be compared, wherein by use of this comparison a validation on the reliability can be done.

Embodiments of the present invention are based on the finding that an incoming digital representation of an RF data signal, e.g. a GNSS signal, can be authenticated by use of an internal time source. The internal time information from the (internal and/or independent) time source can be used for binding a timestamp to a data signal, wherein a verification of the data can be performed based on the information of the timestamp, e.g. by comparing the internal time information carried by the timestamp with an external time information included in the data signal. This verification method could enable the detection of spoofing or meaconing. There are several applications which require secured and trusted time information in the area of mobile user equipment or infrastructure networks. The proposed concept includes a simple user equipment, especially if hardware manipulation can be excluded like in an operation inside a protected infrastructure.

As already discussed, the incoming digital representation of an RF data signal may be a GNSS signal. Therefore, the method can comprise the step of receiving the GNSS signal. This is beneficial, since the GNSS signal includes an external time information. This external GNSS time information together with the position at which the GNSS signal is received can be verified in comparison to the internal time signal.

According to embodiments, the digital representation of an RF data signal (DS) comprises an authenticated portion and wherein the method comprises the step of extracting the authenticated portion or verifying the authenticated portion. Even if a spoofing event occurs, this enables to provide a trusted position and time.

According to further embodiments, the verified data signal comprising a timestamp can be used for verifying the position and time origin of a sensor signal creation, e.g. a camera picture, video or another measurement signal, e.g. from a temperature sensor, pressure sensor, video camera, photo camera, time reference, etc. Therefore, the method may further comprise the step of receiving a sensor signal, wherein the step of combining is performed such that the sensor signal or the sensor signal signature is inserted into the data signal.

According to further embodiments, the data signal may be encrypted so as to enable a secure transmission of this data signal. Therefore, according to embodiments, the method further comprises the step of encrypting the data signal. According to further embodiments, the data signal may be stored, e.g. for buffering before transmitting the data signal.

According to further embodiments, the data signal may be transmitted to an authentication server. According to embodiments, this authentication server can perform the verification when the verification may also be performed internally. According to embodiments, the method comprises the step of verifying the data signal, e.g. based on an analysis of the internal time information, or based on a comparison of internal time information with another time information, such as an external time information taken out of the digital representation of an RF data signal. According to another embodiment, the verifying may be based on an analysis of the internal time information and based on a comparison or offset calculation of the internal time information with the external time information.

For example, verification is achieved if the offset is under an expected limit, wherein no verification (unverified result or manipulation) is achieved if the offset is above an expected limit.

The expected limit may be calculated according to embodiments. In general a model of the internal clock is generated by taking into account several known property parameters of its clock source. This model is then used for the estimation of the potential offset. For example, the calculation may be based on a position of the transmitter for the RF data signal and/or based on a constant delay of a receiver and/or based on the one or more time sources and/or based on a linear prediction of the offset and/or based on a receiver property and/or based on a correlation with previous digital representation of the RF data signals. Background thereof is that a plurality of factors may have an influence on the offset. These influences are taken into account when calculating the offset limit.

As already mentioned above, a further signal may be part of the verification, namely the pulse per second signal. Therefore, the method may, according to further embodiments, comprise the step of receiving a pulse per second signal, where the step of combining is performed such that the pulse per second signal is inserted into the data signal.

Of course, the above method may be computer-implemented. Therefore, another embodiment refers to a computer program having a program code for performing, when running on a computer, the above-described method.

Another embodiment provides an electronic circuitry comprising an RF front end, one or more time sources and a data controller. Further, it is configured to provide a digital representation of an RF data signal. This RF front end may be combined with an optional receiver unit configured to receive the RF data signal and/or to output the digital representation. The one or more time sources may be configured to provide one or more internal time information. The controller is configured to combine the digital representation of the RF data signal and at least one time information of the one or more time information to obtain the data signal comprising the timestamp.

According to further embodiments, the data controller may be configured to encrypt the data signal.

Further embodiments refer to an infrastructure device comprising the circuitry. This infrastructure device may optionally comprise a sensor like a camera. In general, embodiments refer to a system comprising an electronic circuitry and a sensor. Further embodiments refer to a system comprising the electronic circuitry and an authentication server. This authentication server may, according to embodiments, be used to verify the signal, e.g. by verifying an offset between the internal time information and an external time information.

Further details for embodiments are defined by the dependent claims. Below, embodiments of the present invention will subsequently be discussed referring to the enclosed figures, wherein:
- Fig. 1: shows a schematic flow diagram illustrating the method according to a basic implementation;
- Fig. 2a: shows a schematic block diagram of a receiver unit and an authentication server according to embodiments;
- Fig. 2b: shows a schematic receiver unit according to embodiments;
- Fig. 3: shows a schematic block diagram for a receiver unit or for sensors according to further embodiments;
- Fig. 4: shows a schematic block diagram of a receiver unit energy and as time receiver according to further embodiments;
- Fig. 5: shows a schematic block diagram of a receiver unit with sensors including a GNSS receiver (according to further embodiments);
- Fig. 6a, 6b: show schematic diagrams for illustrating their principle of time validation according to embodiments;
- Fig. 7: shows a schematic diagram illustrating an initial and continuous validation of a receiver unit at the server according to further embodiments; and
- Figs. 8, 9: show schematic block diagrams of a receiver comprising an encryption unit according to embodiments.

Below, embodiments of the present invention will subsequently be discussed referring to the enclosed figures, wherein identical reference numerals are provided to objects having a similar function, so that the description thereof is mutually applicable and interchangeable.

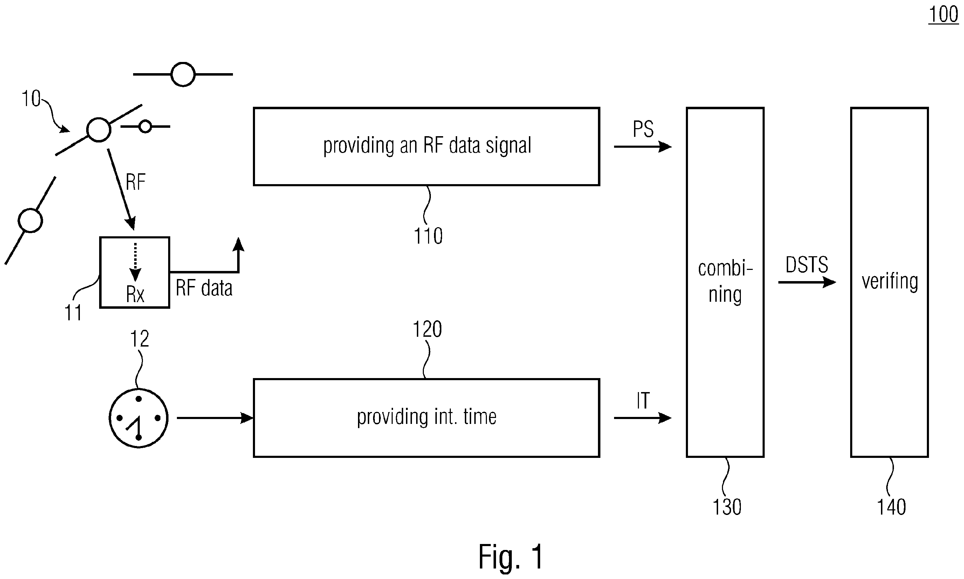

Fig. 1 shows a schematic block diagram of a method 100 for generating a data signal comprising a timestamp including verifying the data signal. The method comprises the two initial steps 110, 120 and two subsequent steps 130, 140.

In the initial step 110 a digital representation of an RF data signal is provided. This digital representation of an RF data signal having the reference numeral DS can be received using a receiver 11 (cf. example definition T4). For example, the data signal can be a signal received from one or more satellites 10, e.g. a GNSS signal (cf. example definition T2). Therefore, the method may optionally comprise the step of receiving the RF signal so as to obtain the DS signal.

This DS signal can be extracted using the step 110. In parallel, an internal time information is provided. This internal time information can be applied by use of one or more internal time sources. The internal time signal is marked by the reference numeral IT. The two signals DS and IT are combined by use of the step 130. Due to the combination a signal called DSTS representing the data signal having a timestamp is generated. This timestamp comprises the internal time information and can be transmitted and/or stored and/or encrypted. After the optional transmission, the authentication of the DSTS signal can be verified by use of the step 140. This verification is done by use of the internal time information comprised by the timestamp.

According to embodiments, the verification can be done by a comparison between the internal time information representing the point of time of the receipt of the RF signal with an external time information, e.g. a time information included in the RF signal. An example definition is given under T1 (T1a for internal time information, T1b for external time information) within chapter "Terms and Definitions". As discussed, the RF signal can be a GNSS signal comprising the external time information. By comparing the internal time information with the external time information, the verification 140 can be performed.

By use of this verification step 140 it is possible to achieve a protection level against spoofing/meaconing. Since one main application is the processing of a GNSS data signal, it is possible to avoid/detect GNSS spoofing and meaconing attacks so as to enable trusted timing authorization and verification based on the GNSS signal by itself. This generates a trusted tracker (GNSS-based) system. Such timing applications can be used in critical infrastructure systems, such as synchronization telecommunication networks and energy networks, financial transactions and stock exchange systems, automated and connected driving and industrial and scientific applications.

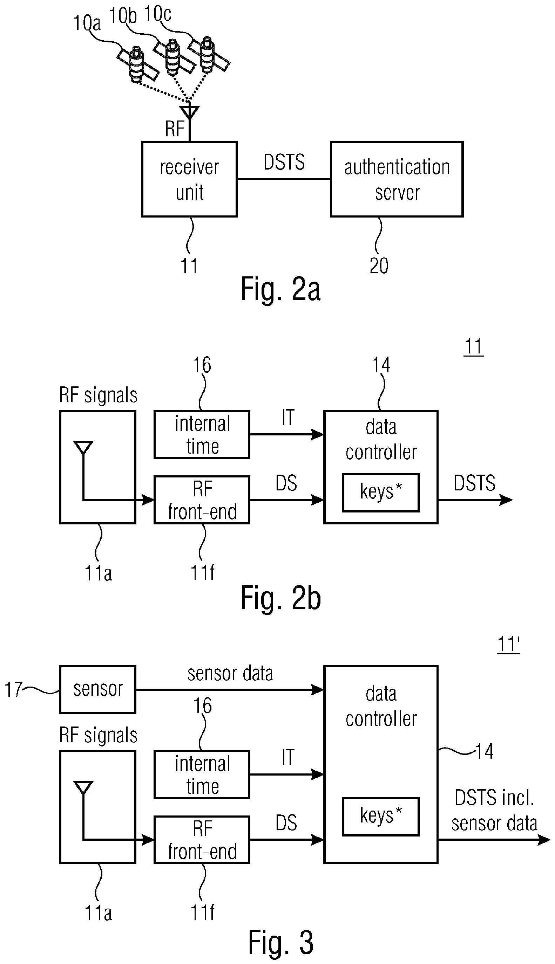

It should be noted that the step 140 can be performed externally, e.g. by use of an authentication server, as it is illustrated by Fig. 2 (or exemplified defined under T5).

Fig. 2 shows a system comprising the receiver 11 and an authentication server 20. The receiver element 11 is configured to receive RF signals from the one or more satellites, 10a, 10b and 10c. The receiver outputs the DSTS signal, i.e. the digital representation of the RF data plus the time, e.g. as digital data package. This DSTS signal is transmitted to the authentication server 20.

In the receiver 11 an apparatus/data controller is included that generates a reliable timing information by exploiting authentic encrypted RF signals (e.g. GNSS) and local time sources (e.g. reference clocks) together with an authentication process of a remote server (see Fig. 2a). The receiver unit 11 provides digital representation of RF data samples combined with an arbitrary number of independent internal time sources. The concept comprises a method to perform an authentication at a server with a time interval estimation. The server 20 can provide reliable timing information (i.e. the offset of the correlation result between server replica and digital representation of the RF data). The authentication server 20 can detect potential threats such as spoofing or meaconing and provide a notification service of the reliable time validation results including corrections.

In the following the systems are explained in detail followed by a description of the authentication method. The receiving unit is shown by Fig. 2b.

The receiver 11 comprises an antenna 11a, an RF front end 11f, an internal time 16 and a data controller 14. The RF signal is received by the front end 11f using the antenna 11a. The RF front end 11f outputs the digital representation of the RF data signal to the data controller 14. The data controller 14 receives the time information from the internal time 16 and combines the two types of information, digital representation of the RF data and time information, so as to generate the DSTS. In detail:
It is configured to receive and process signals proceeding from a RF Front end 11f at exactly the time defined by the internal time (see Fig. 2b). The digital representation of the RF data itself includes time information (i.e. GNSS signals which are generated using a global time reference), which can be extracted after processing. The Data Controller 14 organizes the correct timing of the digital representation of the RF data and is responsible to combine digital representation of the RF data and the internal time information in a data packet.

Optionally the combined data package can be signed by the internal keys 14k of the Data Controller 14 in order to prevent manipulation before forwarded to the authentication server 20. Related confidentiality concern the combination process (digital representation of the RF data and internal time) can optionally consider next to the signature also data protection mechanism such as encryption by internal keys and other similar techniques.

Note: In a secured environment, where no manipulation of the generated data package can be guaranteed, the data can also be stored, sent and processed without further protection mechanism (*keys); this can be applied to the following examples.

Once the receiver unit has a connection to the server 20, the combined data package RFTS (digital representation of the RF data and time) is sent to an Authentication Server 20 in order to be processed.

According to further embodiments, the receiver unit 11' can include one or more sensors 17 as illustrated by Fig. 3. The sensor data can be added to the data flow application data. The combined data package will include application data which has been tagged with the digital representation of the RF data and the internal time. Application data are generated by sensors 17 for instance pictures, video, temperature, motion, acceleration, time reference and other information.

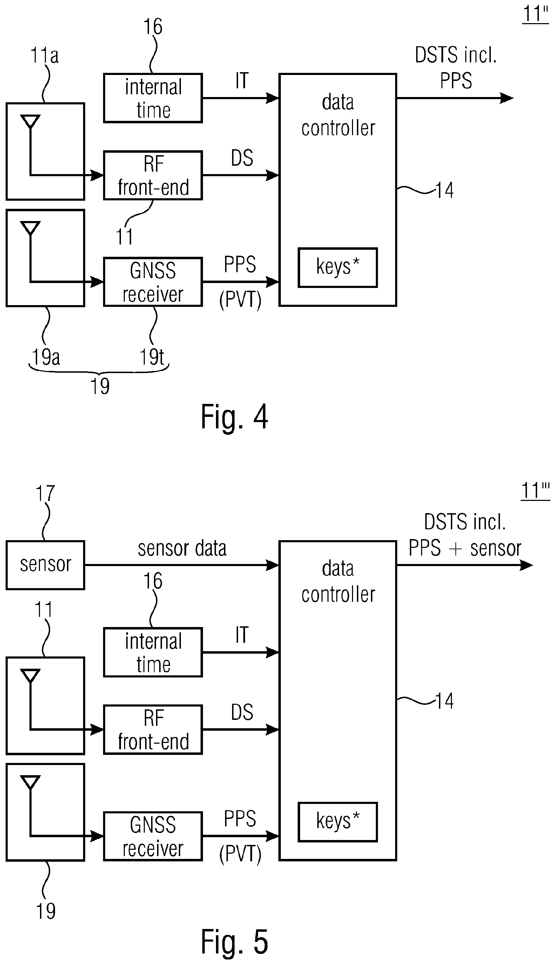

According to a further embodiment, the receiver unit 11" is extended or combined with a GNSS receiver as illustrated by Fig. 4. The GNSS receiver path 19 is marked by the reference numeral 19t and uses the antenna 11a or 19a. The GNSS receiver 19 may be an external (low cost) GNSS receiver 19 outputting data, e.g. Pulse-Per-Second (PPS) and position, velocity and time (PVT). The PPS information is assumed to be synchronized with GNSS PVT or the GNSS time. The PPS data can be authenticated by use of the data controller 14. For this, the data controller 14 receives a PPS signal from the GNSS receiver 19 for combining the unprotected GNSS receiver's timestamp with the digital representation of the RF data and/or with the internal time-stamp. The server 20 can verify the offsets between the digital representation of the RF data, internal time and (optionally) the PPS synchronized GNSS time. In case of spoofing or meaconing events the calculated external time and in combination with the model comparison with the internal time 16 will indicate a deviation.

This embodiment enables beneficially to enable an authentication of a data signal received with a GNSS receiver 19.

It should be noted that the usage of two different receiving paths for the data signal and the GNSS signal is not required. Therefore, according to further embodiments, the receiver 11f can be configured to receive GNSS signals.

According to embodiments, the digital representation of the RF data signals comprises an authenticated and optionally unauthenticated portion. For example the authenticated portion may comprise the external time information. The authenticated portion is for example encrypted or signed, e.g. by use of a sequence to be correlated so that it is possible to determine the authenticity of the RF signal. This allows beneficially to avoid spoofing (attempt to deceive a GNSS receiver by broadcasting fake GNSS signal). According to embodiment, the receiver 11 or 11' or 11" is configured to encrypted / verify the received authenticated portion of the data signal. This can be done by using a generated replica.

With respect to Fig. 5, a combination of the embodiments of Fig. 3 and Fig. 4 are shown. Fig. 5 shows a receiving unit 11"' comprising one or more sensors 17, an RF receiver path 11 and the (external) GNSS receiver path 19.

In the digital representation of the RF data including an external time information. Using trusted external time calculated from the authenticated portion of the digital representation of the RF data, the server can verify the time offset between the digital representation of the RF data and the untrusted GNSS PVT and PPS time. Using this method, the server will verify that the untrusted GNSS receiver 19 input is not manipulated since the time offset measured are under the expected limits. Note according to another option the server can verify the data signal just by use of the internal time.

Fig. 4 the digital representation of the RF data including an external time information. Using trusted external time calculated from the authenticated portion of the digital representation of the RF data, the server can verify the time offset between the digital representation of the RF data and the untrusted GNSS PVT and PPS time. Using this method, the server will verify that the untrusted GNSS receiver 19 input is not manipulated since the time offset measured are under the expected limits. Note according to another option the server can verify the data signal just by use of the internal time.

Below, the authentication server (cf. Fig. 1a) will be discussed. The authentication server can be an internal unit with respect to the receiver or an external unit connected to the receiver and/or localized at an external place. The authentication server has the purpose to perform the verification of the data signal, preferably by using the time information. For this, the time information included in the timestamp can be extracted.

The verification is performed by analyzing the different time information. In general a model of the internal time source will be used for the time prediction in order to set the limit declaring when a manipulation is declared to be detected. The analyzing can comprise a comparison of the time information which is based on the internal time source and represents the point of time of receipt of the data signal with an external time information, e.g. a time information included by the data signal itself. Ideally, the offset between the internal and the external time information is considered to be zero. However, an initial offset is expected if no synchronization is applied, wherein a sufficiently small variation over time can be interpreted as non-manipulated data. The maximum acceptable offset can be defined by a limit, which may be based on the transmitter constellation, the operational environment, and type of apparatus of the receiver unit.

Below, the role of the authentication server 20 will be discussed in detail including optional features:
The role of the authentication server 20 is the processing the collected data by the receiver unit 11, 11', 11" and the provision of a reliable time information based on time interval estimation method. The combined data package contains digital representation of the RF data generated by receiver unit 11, 11', 11" is based on a certain time (i.e. in GNSS signals are received at the receiver unit at the same reception time). In that case, the digital representation of the RF data stored at reception time can be processed if the relation between the reception time and the time of the transmission is known. The received GNSS samples and the local generated replica with respect to each satellite signal propagation delay will result in a detectable correlation peak if both sequences matches in the time domain (considering also frequency corrections).The accurate time information is a crucial component in order to configure the server's observation window.

In case that an unwanted replay transmitter (i.e. GNSS meaconing) sends higher power RF signals than the origin transmitter or even blocks the original RF signals, the receiver unit receives manipulated RF signals. Due to the reason that the meaconing generates a time delay in the signal reception, the processing of the received data (from unwanted replay transmitter) at reception time will detect that it does not match with the expected time of transmission. The server can use a prediction method with the support of the internal time in order to detect such attacks. An approximate time information will not be accurate enough for that verification. The server can receive additional information about the digital representation of the RF data by assistance data (i.e. GNSS PVT, measurements), which will support the calculations at the server.

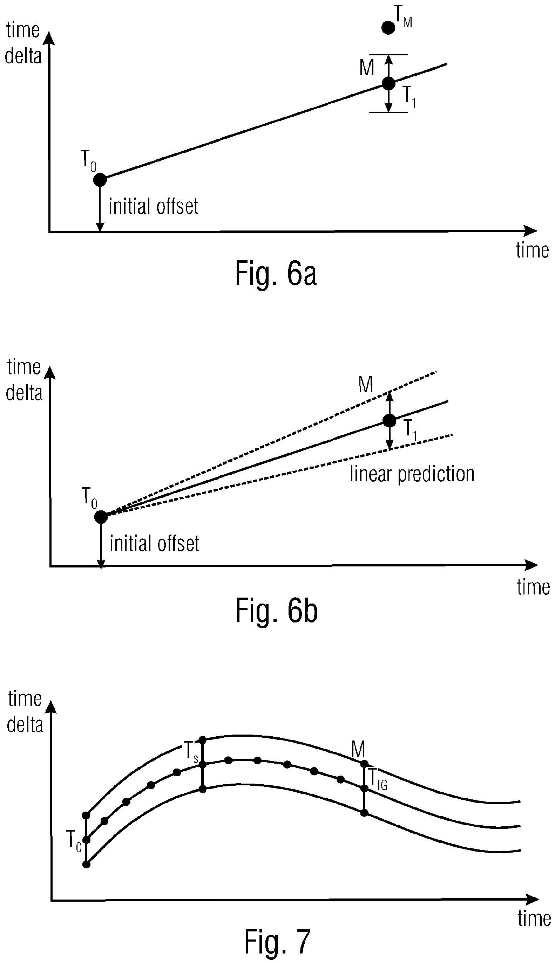

With respect to Figs. 6a and 6b , the method for time verification and monitoring will be discussed. The offset between two types of time information, e.g. an internal time information representing the point of time of a receipt of a signal and an external time information representing the point of time of a transmission of the same signal can be used to validate the signal itself. This external time information may be the information indicating the point of time of transmission, so that the internal time information should match with the external time information with respect to the propagation time of each signal. For example, if the deviation is within an expected range, it can be concluded that this timestamp is correct and the transmitted information, e.g. a PVT information was transmitted by a correct transmitter. The discussion below will show that the deviation can vary over time. Therefore, the limit depends on further factors of influence.

Within the first time verification at T₀ the initial offset of digital representation of the RF data and internal time is calculated and adjusted. In the next authentication step the server needs to detect time deviation related the time T₁. The difference of internal time and calculated time (derived from the digital representation of the RF data) is only permitted in a maximum deviation (M). This is illustrated by Fig. 6a.

According to further embodiments, this estimation can be based on a linear prediction that increases for a longer time interval of the authentication steps. The linear prediction is illustrated by Fig. 6b illustrating the time verification with initial offset and maximum deviation.

If the server verifies that the deviation between the estimated T₁ and the measured T_{M} is larger than the specified threshold M, the server will detect a manipulation attempt. The x-axis represents the calculated time at the server (based on the digital representation of the RF data). The y-axis is the time offset between the transmitted receiver unit time and the calculated. The evolution of the time offset depends on the properties of the stability of the components at the receiver unit. For example, if the measured time at T_{M} exceeds the threshold M, no time verification can be given.

Note that the digital representation of the RF data includes a constant internal delay (from antenna to RF data) which can be known by the server and/or can be transmitted by the receiver unit.

Considering the receiver unit internal time source is based on low-cost real time clock (RTC) components the time, according to embodiments, is very unstable related to internal as well as external factors (i.e. temperature change). This will lead to an early time drift and time needs to be measured and adjusted in shorter intervals.

This situation is illustrated by Fig. 7 showing an initial and a continuous verification of a receiver unit at the server. For the initial time (T₀) that the receiver unit is operated, it is recommended to calculate and set the initial offset without any manipulation. The server stores information of the receiver unit and sets a limit for the verification. A variable time estimation represents a more realistic estimation approach refining each verification the time limits. In case the receiver unit has no connection to the server, the data packages should be stored and processed once connection is established. If data packages are skipped for a longer time the server will measure time deviations that are out of the limit M.

If the internal time is validated, then the time information included in the digital representation of the RF data can be used as a verified and trusted time information. In case of monitoring of PPS signals, the offset of the PPS signal can be monitored at the authentication server.

The received RF data signal is composed out of plurality of RF signals from a plurality of transmitters, each carrying a time information representation the point of time of the transmission. For example, if the signals can carry a non-authentic data portion that can be used for the PPS and PVT time information. If the evaluation with the authentic portion results in the same signal the verification is successful. Note the pulse per second represents a time information, so it can be used for verification.

Below, further details for the internal time sources will be given, wherein it should be noted that these details represent optional features.

The receiver unit internal time source (i.e. one or more RTCs) is implemented to be stable and below a required tolerances.

In most of the applications, devices uses only oscillators with much lower long time stability than satellites clock references, for that reason it is necessary that the server monitors this clock. The server can store periodically received data in order to monitor the user receiver internal clock variations. The period depends on the stability of the internal clock. The server can accept variations in expected range in the lifetime of a receiver unit.

In case the receiver unit needs a protection against manipulation, a tamper protection has to be implemented. The internal time can be calculated as a combination of several RTCs in order to improve stability or security against manipulation.

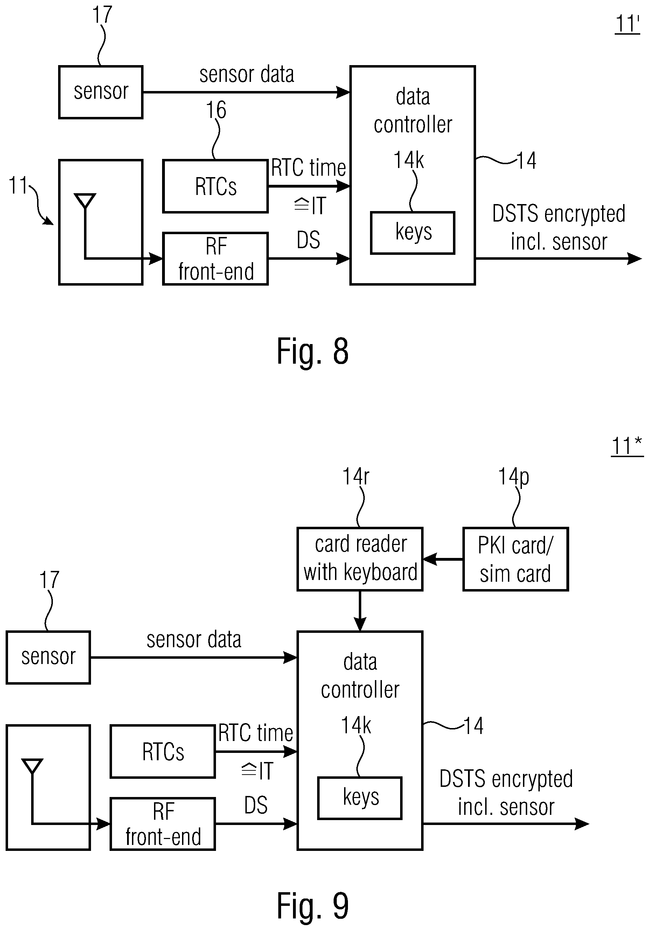

With respect to Figs. 8 and 9, enhancements of the embodiment of Fig. 3 will be discussed, wherein it should be mentioned that these enhancements can also be applied to the other embodiments.

Fig. 8 shows the receiver 11', wherein the optional key feature 14k of the data controller will be discussed. The data controller 14 according to this embodiment comprises an encryption unit marked by the reference numeral 14k. By use of this encryption unit 14k the data controller 14 is configured to encrypt all data to be transmitted, e.g. the data including the timestamp and including the sensor information. This enables to output an encrypted signal marked by the reference numeral DSTS'. In this way, an authentication and property encryption of all data which should be transmitted can be achieved, so that the server (not shown) can guarantee that the information has not been manipulated. The receiver unit should be protected against manipulations. Here, it should be ensured that no external access to the receiver unit 11' is enabled.

With respect to Fig. 8, the encryption unit 14k is highly simplified. This encryption unit 14k can be enhanced as illustrated by the receiver 11'*. Here, the data controller 14 has an input for an external encryption medium, like a PKI card/SIM card. This input may be realized by a card reader, a card reader with a keyboard or comparable unit. This card reader is marked by the reference numeral 14r and enables to read the PKI card/SIM card 14p.

The information stored on the PKI card/SIM card 14p is used for performing the encryption. Additionally or alternatively, the information input by use of the keyboard can be taken into account.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

### Terms and Definitions

Below, definitions for terms used within the above description are given. Within the table cross-references (T-ID) are used.

| **T_ID** | **Term** | **Description** | **Context** |
|---|---|---|---|
| T1 | Time information | Represents information of dates and times; for relative times valid with reference only | Used as a representation of dates and times (e.g. timestamp) |
| T1a | Internal time information (IT) | Time based on internal time source or combination of internal sources of the system | Not alterable from information provided by (RF) data signal but instable so time verification is required Internal clock, e.g. RTC |
| T1b | External time information | Time based on any external time source | Derived time by e.g. processing GNSS signal, can be an protected external time information (e.g. from Galileo PRS) or an unprotected external time information (e.g. GPS L1, Galileo OS,...) |
| T2 | Data signal (DS) | Digital representation of a radio frequency (RF) data signal | Contain any kind of time information (in case of GNSS it is not necessary limited to a single frequency band or GNSS provider) (T1b) |
| T2a | Unprotected portion | Part of (T2) that is insufficiently or not at all protected against any kind of tampering | Contain external time information (T1b) Unprotected signals (i.e. GPS L1, Galileo OS) |
| T2b | Authenticated portion | Part of (T2) that is undisputed origin and not a copy/fake from a protected source | Contain external time information (T1b) e.g. encryption used to ensure authenticated (e.g. Galileo PRS), however, still insufficiently protected against meaconing (T3b) |
| T3 | Tampering | Manipulation of incoming signals or manipulation of components of a system | Malicious distortions |
| T3a | Spoofing | Attempt to deceive time/position of a GNSS receiver by broadcasting fake GNSS signal(s); works only for unprotected signals | Used as generating a spurious signal |
| T3b | Meaconing | Attempt to deceive a GNSS receiver by broadcasting delayed GNSS signal(s), | Used as replay or rebroadcast a signal, |
| | | works for protected signals, too | typically, with power higher than the original signal |
| T4 | Receiver unit | Contains at least RF front-end, internal time source and data controller for DSTS output | Extendable by sensors, GNSS, etc. |
| T4a | Data controller | Part of (T4) that combines the data signal (DS) and the internal time information (IT) to obtain the data signal comprising the timestamp (DSTS) comprising the internal time information. | |
| T5 | Authentication server | Server that extracts the unprotected (T2a) portion and if available authenticated portion (T2b), information from the data signal (T2) and then derives the external time information (T1b). It can further detect spoofing (3a) using a comparison of the unprotected (T2a) with the authenticated portion (T2b). For meaconing (T3b) detection, the comparison of the internal time information (T1a) with a prediction based on a model of the internal time information (T1a) is used. | Contain the time verification model and method (T5a, T5b) |
| T5a | Verifying a signature | Method of extracting external time information (1b) from the DS (T2) | In GNSS context a correlation process of the received signal with a replica signal (being the signature of the signal) to retrieve a PVT |
| T5b | Time verification | Model used to verify the internal time information (T1a) with result of (T5a) or any external time information (T1b) | Prediction based on a model |

## Claims

1. Method (100) for generating a data signal comprising a timestamp (DSTS), the method (100) comprising the following steps:
providing (110) a digital representation of an RF data signal (DS);
providing (120) one or more internal time information (IT) by using one or more time sources (12, 16);
combining (130) the digital representation of an RF data signal (DS) and the one or more internal time information (IT) of the one or more time sources (12, 16) to obtain the data signal comprising the timestamp (DSTS) comprising the internal time information; and
verifying (140) the data signal (DSTS) based on the one or more internal time information.

2. Method (100) according to claim 1, wherein the digital representation of an RF data signal (DS) comprises an external time information; and/or
wherein the digital representation of an RF data signal (DS) is composed out of plurality of RF signals received from a plurality of transmitters or satellites; and/or
wherein the digital representation of the RF data signal (DS) is composed out of plurality of RF signals received from a plurality of transmitters or satellites, each carrying a time information representation the point of time of the transmission.

3. Method (100) according to one of the previous claims, wherein the digital representation of an RF data signal (DS) comprises a GNSS signal and/or a position information.

4. Method (100) according to one of the claims 2 and 3, wherein the method (100) comprises the step of extracting the external time information out of the digital representation of an RF data signal (DS).

5. Method (100) according to one of the previous claims, wherein the method (100) comprises the step of receiving the digital representation of an RF data signal (DS).

6. Method (100) according one of the previous claims, wherein the digital representation of the RF data signal (DS) comprise an authenticated portion and wherein the method comprises the step of extracting the authenticated portion or verifying a signature of the authenticated portion.

7. Method (100) according to one of the previous claims, wherein the method (100) further comprises a step of receiving a sensor signal or sensors (17) signals, wherein the step of combining (130) is performed such that sensor signal or sensors (17) signals is inserted into the data signal.

8. Method (100) according to one of the previous claims, wherein the method (100) comprises a step of encrypting the data signal.

9. Method (100) according to one of the previous claims, wherein the method (100) comprises the step of storing the data signal.

10. Method (100) according to one of the previous claims, wherein the method (100) comprises the step of receiving a pulse per second signal, wherein the step of combining (130) is performed, such that the pulse per second signal is inserted into the data signal.

11. Method (100) according to one of the previous claims, wherein the method (100) comprises the step of transmitting the data signal to an authentication server (20).

12. Method (100) according to one of the previous claims, wherein the step of verifying (140) is based on an analysis of the internal time information or based on a comparison of the internal time information with one or more another time information or based on a comparison of the internal time information with one or more external time information or based on a calculation of an offset between an internal time information and one or more another time information; and/or wherein the another time information is out of the group comprising:
- external time information;
- a pulse per second signal; and
- an externally received pulse per second signal.

13. Method (100) according to claim 12, wherein the result of the step of verifying (140) is a verified result if the offset is under an expected limit and an unverified result (manipulation) if the offset is above the expected limit.

14. Method (100) according to claim 13, wherein the method (100) further comprises the step of calculating the offset limit based on a position of the transmitter for the digital representation of the RF data signal (DS) and/or based on a constant delay of a receiver and/or based on the one or more time sources (12, 16) and/or based on model prediction of the offset and/or based on a receiver property and/or based on a correlation with previous digital representation of the RF data signals (DS).

15. Computer program comprising a program code for performing the steps of the method (100) according to one of the previous claims when running on a computer.

16. An electronic circuitry (11, 11', 11", 11'*) comprising:
an RF front end (11f) configured to provide a digital representation of an RF data signal (DS);
one or more time sources (12, 16) configured to provide one or more internal time information; and
a data controller (14) configured to combine the digital representation of the RF data signal (DS) and at least one internal time information of the one or more time information to obtain the data signal comprising the timestamp (DSTS) comprising the internal time information enabling a verification the data signal.

17. The electronic circuitry (11, 11', 11", 11'*) according to claim 16, wherein the circuitry comprises a receiver unit configured to receive the RF data signal (DS); and/or wherein the circuitry comprises a receiver unit configured to receive the RF data signal (DS) and to extract an authenticated portion of the RF data signal or to verify a signature of an authenticated portion of the RF data signal.

18. The electronic circuitry (11, 11', 11", 11'*) according to claim 16 or 17, wherein the circuitry comprises a sensor (17) or an interface for receiving sensor (17) data and wherein the data controller (14) is configured to perform the combining (130) so as to obtain the data signal comprising the timestamp (DSTS) and a sensor (17) information.

19. The electronic circuitry (11, 11', 11", 11'*) according to one of claims 16 to 18, wherein the electronic circuitry (11, 11', 11", 11'*) is connected to a GNSS receiver or an external GNSS receiver or comprise a GNSS receiver, the GNSS receiver or the external GNSS receiver receiving a pulse per second signal, wherein the data controller (14) is configured use the pulse per second signal as digital representation of the RF data signal.

20. The electronic circuitry (11, 11', 11'', 11'*) according to one of claims 16 to 19, wherein the data controller (14) is configured to encrypt the data signal.

21. Infrastructure device comprising the circuitry according to one of claims 16 to 20.

22. A system comprising the electronic circuitry (11, 11', 11'', 11'*) according to one of claims 16 to 21 and an authentication server (20) configured to receive the data signal.

23. The system according to claim 22, wherein the authentication server (20) is configured to verify the data signal based on an analysis of the internal time information or based on a comparison of the internal time information with one or more another time information or based on a comparison of the internal time information with one or more external time information or based on a calculation of an offset between an internal time information and one or more another time information; and/or wherein the another time information is out of the group comprising:
- external time information;
- a pulse per second signal; and
- an externally received pulse per second signal.
